# EUROPEAN PATENT SPECIFICATION

(11) **EP 4 370 843 B1**
(45) Date of publication and mention of the grant of the patent: **12.02.2025**
(21) Application number: 22741298.8
(22) Date of filing: 11.07.2022
(51) Int. Cl.: F25B 15/02

(54) **DEPHLEGMATOR FOR A GENERATOR OF REFRIGERANT VAPOUR FOR THERMAL ABSORPTION MACHINES, AND GENERATOR COMPRISING SUCH A DEPHLEGMATOR**
DEPHLEGMATOR FÜR EINEN KÄLTEMITTELDAMPFERZEUGER FÜR WÄRMEABSORPTIONSMASCHINEN UND EINEN SOLCHEN DEPHLEGMATOR UMFASSENDER KÄLTEMITTELDAMPFERZEUGER
DÉPHLEGMATEUR POUR GÉNÉRATEUR DE VAPEUR DE FLUIDE FRIGORIGÈNE POUR MACHINES THERMIQUES À ABSORPTION ET GÉNÉRATEUR COMPRENANT UN TEL DÉPHLEGMATEUR

(30) Priority: 12.07.2021 IT 202100018314
(43) Date of publication of application: 22.05.2024
(73) Proprietor: Politecnico di Milano, 20133 Milano (IT)
(72) Inventor: PISTOCCHINI, Lorenzo, 20156 Milano (IT); TOPPI, Tommaso, 22063 Cantu (IT); APRILE, Marcello, 20865 Usmate Velate (IT); MOTTA, Mario Gualtiero Francesco, 20131 Milano (IT)
(74) Representative: Lavoix
(86) International application number: PCT/EP2022/069328
(87) International publication number: WO 2023/285385

(56) References cited:
- WO-A2-2010/063840
- US-A- 4 573 330

## Description

The present invention relates to a dephlegmator for a generator of refrigerant vapour for thermal machines based on an absorption cycle, and to a generator comprising such a dephlegmator.

As is known, thermal absorption machines, typically chillers or heat pumps, are thermal machines that exploit the capability of a substance, whether liquid or solid, to 'absorb' a second chemical species in the gaseous state; for example an unsaturated solution of water and ammonia can absorb ammonia vapour.

This property allows realizing a refrigeration cycle with a thermochemical compressor: the refrigerant vapour at low-pressure is not compressed with an electrically powered mechanical compressor, but absorbed by the absorbent solution, which is then pumped at high pressure with reduced power consumption and sent to a generator or desorber. In the generator, the solution is heated to boiling, resulting in the production of high-pressure refrigerant vapour necessary for realizing the refrigeration cycle.

The refrigerant-rich, high-pressure vapour is sent to a condenser and then, passing through an evaporator, returns to an absorber.

The hot, depleted solution exiting the generator flows into a solution heat exchanger (SHX), which has the purpose of recovering the heat of the depleted solution by preheating the refrigerant-rich solution pumped towards the generator, which then passes through a thermal expansion valve and also returns to the absorber, where it absorbs the refrigerant vapour.

In particular, the refrigerant vapour is generated in the boiler of the generator, in which the refrigerant-rich solution is kept boiling by the heat supplied by a high-temperature source, e.g. a burner.

When the vapour pressure of the absorbent of the solution is relatively high, e.g. in the case of water-ammonia thermal machines, the generator also comprises a rectifier, which, in turn, consists of two sections, typically a stripping column or stripper or analyser, and a dephlegmator or partial condenser.

As a whole, the purpose of the rectifier is to reduce the absorbent concentration in the vapour flow produced by the boiler by means of mass exchange with the rich solution entering the generator and partial condensation of the vapour itself, thus increasing the percentage of refrigerant contained in the high-pressure vapour exiting the generator itself.

In operation, the generator of a thermal absoprtion machine, in particular an absorption heat pump, must manage significant power variations in input to the burner, significant variations in the flow rate and level of the solution in the various sections, and significant variations of the temperature and internal pressure. All of this while ensuring complete protection from leakages to the outside, particularly when ammonia is used, with no maintenance over tens of thousands of hours of operation, and without adversely affecting the efficiency of the heat and mass exchanges in the various components.

Currently, known solutions allow for relatively satisfactory results, albeit at the cost of design complexity and/or of oversizing various components, which ultimately result in an increased footprint, and in particular an increased height of the generator, an increase in the amount of refrigerant contained in the heat pump, and in the end of the construction costs.

Such drawbacks are even more problematic when thermal machines are used in the residential sector, where reducing the footprint and industrialising the product are of fundamental importance.

Clearly, the dephlegmator plays an important role in terms of the construction and overall performance of the generator.

In particular, the dephlegmator uses a coolant fluid, to which the vapour flows traversing the dephlegmator transfer the condensation heat.

Depending on the fluid used, this heat may be variously reintroduced into the thermodynamic cycle; currently, three fluids are usually used: air, water, or the same solution rich of refrigerant is used to generate the refrigerant vapour, typically a solution of water and ammonia directed at the inlet of the generator.

In the case of air-condensed chillers, the partial transfer of the condensation heat to the air flow does not allow for recovery of any kind.

In the case of heat pumps intended to produce hot air, the exchange with the air flow does lead to a certain amount of recovery, but the coefficient of performance (COP) relative to the amount of heat introduced into the generator does not exceed 100 %, i.e. the heat consumed in the boiler to produce the vapour is directly transferred to the end user without any useful heat pumping function.

In the case of heat pumps for hot water production, the same degree of recovery is obtained as in the foregoing case if the partial condensation heat is transferred to the water flow; for machines of this type, any heat transfer to an air flow would result in zero recovery.

In the absorption heat pumps currently on the market, the most common practice is to cool the vapour flow in the dephlegmator by means of the refrigerant-rich solution pumped in the generator. The energy recovery in this case is greater than the aforementioned cases, because the enthalpy of the condensation of the vapour becomes the enthalpy of the rich solution that must be brought to a boil in the generator, and thus it does not affect the overall COP of the thermal machine.

In any case, the common decision to cool the dephlegmator with the rich solution flow from the pump is subject to a number of problems.

For example, the thermal power of absorption machines results from evaporation, condensation, and absorption processes characterised by very high specific enthalpies; thus, the flow rate of the rich solution, which is a vector of the refrigerant, is small, on the order of a few kg/h per kW of thermal power in the case of heat pumps. The small flow rate implies a low thermal capacity; the solution heats up rapidly in the dephlegmator, and the mean difference in temperature between the flows, which is the motor of the heat exchange, is reduced. The low flow rate also results in very low heat exchange coefficients between the solution and the surfaces of the dephlegmator. Both of the aforementioned effects of the low flow rate of the solution make it necessary to increase the length of the circuits in order to increase the heat exchange surface area and obtain adequate rectification, which results in increased footprint and costs.

Another possible way of obviating low heat exchange coefficients is to reduce the flow passage section of the rich solution in order to increase its speed and turbulence.

In any case, both solutions result in an increased pressure loss, which is particularly critical where, as is common with small machines, the pump of the solution is an alternative volumetric pump, for example a membrane-based pump.

Indeed, greater pressure drops in the dephlegmator may increase the intensity of harmful pressure spikes that occur at every stroke of the pump, thus shortening the useful life of the pump itself, or necessitating the use of a damping system.

Moreover, heating the rich solution in the dephlegmator results in reduced cooling capacity of the depleted solution in the so-called solution-cooled absorbers (SCA) in the case of machines based on GAX (generator-absorber heat exchange) or SHX (in the case of single-effect cycles) cycles, thus significantly reducing the benefit of the internal recovery obtained.

Another consequence of using the rich solution as a coolant in the dephlegmator is an increased complexity of any regulation of the capacity of the dephlegmator itself, i.e. the purity of the vapour produced, which ultimately influences the maximum pressure value of the thermodynamic cycle.

Additionally, in order to maximize the energy efficiency of the dephlegmator, its structure must ensure that the reflux of the condensate, which is very rich in refrigerant, comes into full contact with the vapour flow arising within the dephlegmator itself, resulting in the so-called 'self-analysis effect'.

In order to ameliorate this effect, in some solutions the dephlegmator is realized as a vertical component inside the head of the generator, thus increasing its height and thus the overall dimensions of the machine, in particular if the exchange surfaces are important due to the limited turbulence of the rich solution and/or to the limited mean temperature difference between the vapour flow to be condensed and the rich solution.

To avoid this drawback, in the prior art the dephlegmator is commonly a separate component from the generator, extending horizontally or inclined and has a siphon through which the condensation flows back into the generator.

This solution allows for greater flexibility in terms of the shape and compactness of the machine, but the aforementioned self-analysis effect within the dephlegmator is substantially limited given that the condensation accumulates at the base and only partially comes into contact with the vapour flow.

Lastly, another deficiency of known dephlegmators is that of vapour bypass, i.e. a certain amount of vapour does not come into contact with the cold surfaces of the dephlegmator, i.e. the surfaces that transfer heat to the coolant, and thus does not undergo the intended partial condensation.

This phenomenon becomes more acute in the case of dephlegmators of reduced size, in which the surface area on which the heat exchange with the coolant occurs is reduced.

The relevant prior art documents are US4573330A and WO2010/063840A2.

The main scope of the present invention is to provide a dephlegmator for a generator of refrigerant vapour for thermal absorption machines that is capable of at least partially mitigating one or more of the aforementioned disadvantages.

In particular, within this scope, one object of the present invention is to provide a dephlegmator for a generator of refrigerant vapour for thermal absorption machines that allows obtaining vapour flows having an adequate degree of refrigerant purity, according to a structure that is compact, functionally efficient, and can be realized at relatively low cost.

Another object of the present invention is that of providing a dephlegmator allowing for adequate exploitation of the auto-analysis effect within the dephlegmator itself and minimising, if not completely avoiding, any bypass by the vapour flows passing through it.

A further object of the present invention is to provide a dephlegmator allowing for optimal control of the purity of the refrigerant over the entire broad operating range of the heat pump, with the possibility of limiting purity in favour of reduced maximum pressure in the case of hot water production.

The present invention is disclosed in the independent claim 1. Further embodiments are disclosed in the dependent claims.

Other characteristics and advantages of the invention will become apparent from the following detailed description, which is provided by way of non-limiting example, by reference to the attached drawings, in which:
Fig. 1 shows one possible embodiment of a plurality of tubes that are used in a dephlegmator.
Fig. 2 shows a plurality of stacked plates according to one possible embodiment of a dephlegmator.
Fig. 3 shows a possible embodiment of a perforated plate affixed to a conveyor tube of rectified vapour used in a dephlegmator.
Fig. 4 is a perspective view of one of the plates of fig. 2;
Fig. 5 shows the components of fig. 1 - 3, as assembled in a dephlegmator according to the present invention.
Fig. 6 is a cross-section schematically illustrating a generator of refrigerant vapour for absorption thermal machines using a dephlegmator according to the invention;
Fig. 7 shows a possible variant of the generator of fig. 6;
Fig. 8 is a schematic representation of one possible embodiment of a system for controlling the flow rate of the cooling water in a dephlegmator, allowing regulating the purity of the vapour exiting the dephlegmator itself.

It should be noted that, in the following detailed description, components that are identical or similar from a structural and/or functional standpoint may have the same or different reference numbers, independently of whether they are shown in different embodiments of this invention or in different parts.

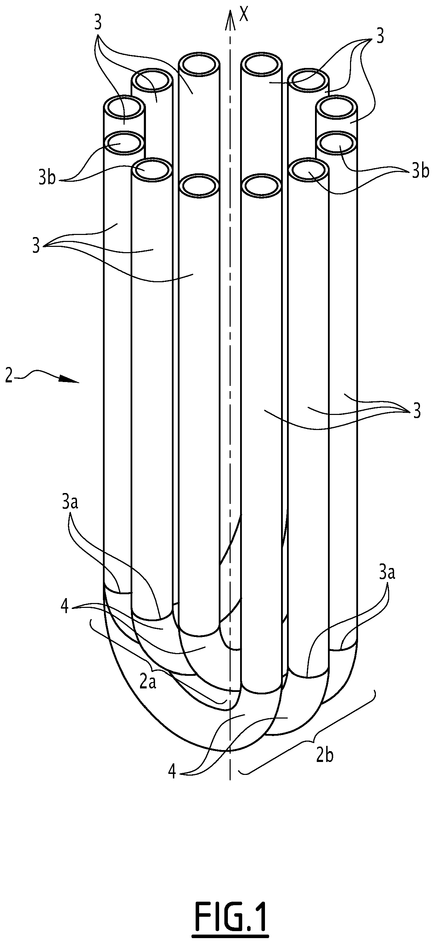

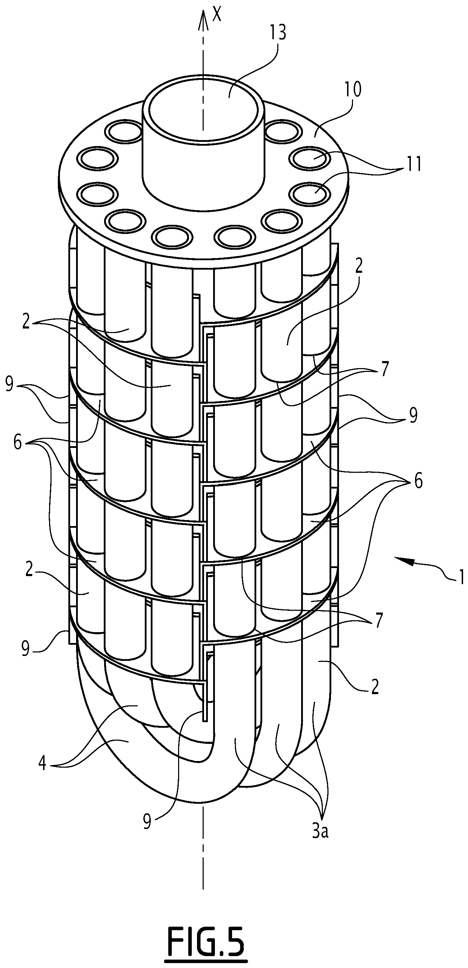

Figures 1-4 and 8 show embodiments being useful for understanding the invention, which are outside the subject-matter of the claims. Figures 5-7 show embodiments according to the present invention, which disclose a dephlegmator according to claim 1.

It should further be noted that, in order to provide a clear and concise description of this invention, the drawings may not necessarily be to scale, and some characteristics of the description may be shown schematically.

Moreover, when the term "adapted " or "arranged or organized" or "configured" or "shaped" or a similar term is used in the present document, with reference to any component as a whole, or to any part of a component, or to a combination of components, it is to be understood that it refers to and correspondingly includes the structure and/or configuration and/or shape-form and/or positioning.

In addition, when the term "substantial" or "substantially" is used herein, it is to be understood as including an actual variation by plus or minus 5% relative to that which is indicated as a value, position, or axis of reference.

Furthermore, when the terms "transversal" or "transversally" are used herein they are to be understood as including a direction that is not parallel to the reference part or parts or direction(s)/axis to which they refer; and perpendicularity is to be considered one specific case of transversal direction.

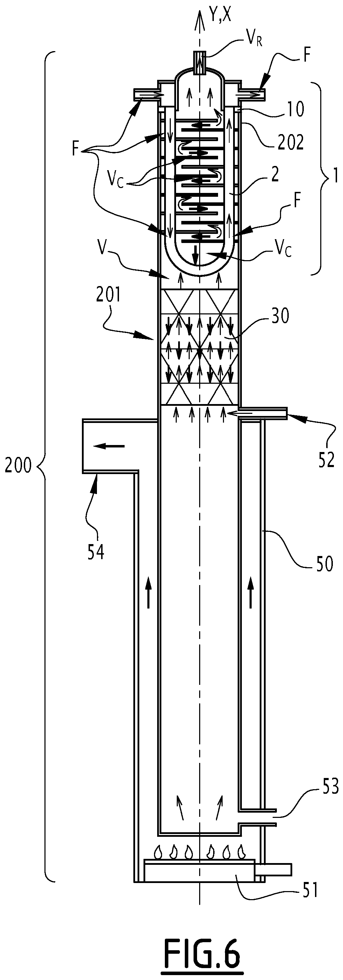

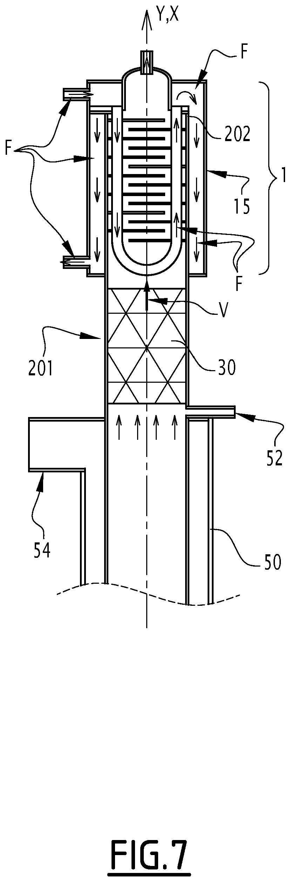

Fig. 5 shows a dephlegmator according to claim 1, indicated as a whole by the reference numeral 1, suited for use in a generator of refrigerant vapour 200 for thermal absorption machines, two possible exemplary embodiments of which are shown in fig. 6 and 7.

As shown schematically in figures 6 and 7, the generator 200 comprises a casing 201, which may be made of one metal piece or of several connected metal pieces, e.g. of cylindrical shape, and, as a whole, extends vertically along a substantially vertical reference axis Y.

A boiler, schematically represented by reference numeral 50, which is suited to boil a solution containing an absorbent substance and an absorbed refrigerant, is arranged at the bottom of the generator 200, so as to generate vapour flows containing the refrigerant.

For example, a solution comprising water and ammonia may be inserted into the boiler 50 via the conduit 52 and boiled by means of a burner 51, and then exit the boiler 50 via the conduit 53; the hot fumes generated by the burner 51, on the other hand, may instead exit via the conduit 54.

The generated flows of vapour rich of refrigerant, indicated in figures 6 and 7 by the letter V, rise towards the top of the generator 200, and, before reaching the dephlegmator 1 according to claim 1, usually pass through a stripping stage or stripper, schematically represented by the reference numeral 30, which is suitable to carry out simultaneous cooling of the vapour flows V from the boiler 50, so as to provide partial condensation of the absorbent, e.g., water, and heating of the liquid solution Vc coming from the dephlegmator 1 or from an upper inlet for the rich solution pumped in the generator 200 with evaporation of the refrigerant, thus increasing the percentage of refrigerant, i.e. ammonia, contained by them.

Both the boiler 50 and the stripper 30 that may be used in the generator 200 may be of any embodiment and operating modality known in the prior art and/or easily realisable by a person skilled in the art, and, in any case, are irrelevant for the purposes of describing the dephlegmator 1, and thus they are not described in further detail herein.

As shown in fig. 5, the dephlegmator 1 according to claim 1 comprises at least a plurality of tubes 2 for circulating the coolant fluid F, indicated by reference letter F in figures 6 and 7, which is suitable to cool the vapour flows V rising through the dephlegmator 1 by heat exchange, as will be discussed in greater detail hereinafter.

Each tube 2 comprises at least one rectilinear portion 3 extending longitudinally in a direction substantially parallel to a substantially vertical reference axis of the dephlegmator 1, indicated by the letter X in figures 1, 2, and 5.

When the dephlegmator is installed in the generator 200, its vertical reference axis X preferably substantially coincides with the axis Y along which the generator 200 itself vertically extends.

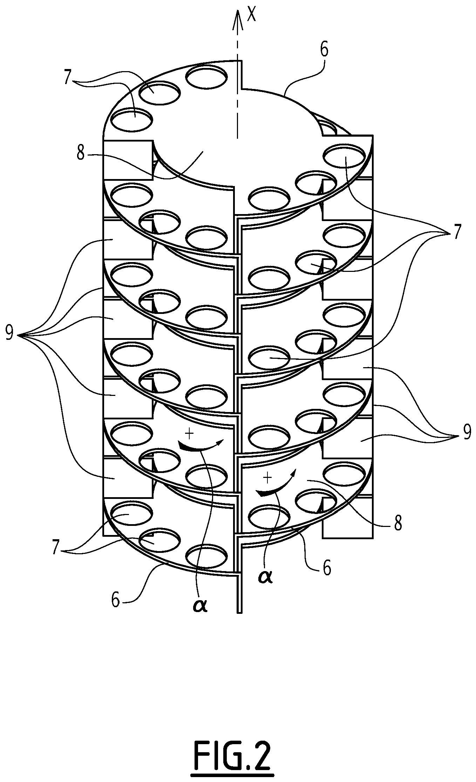

Furthermore, the dephlegmator 1 according to the invention comprises at least a plurality of plates 6, which, as shown, for example in figures 2 and 5, are stacked up in sequence one on top of the other along the reference axis X.

Each plate 6 comprises a plurality of through holes 7 that are each traversed by a corresponding rectilinear portion 3 of a tube 2 of the plurality of tubes, and the plates 6 are suitably configured and mutually arranged so as to convey at least part of the vapour flows V traversing the dephlegmator 1 along the outer walls of the longitudinal portions 3 of one or more tubes 2 of the plurality of tubes 2.

Usefully, in one possible embodiment, schematically shown in fig. 2 for only two consecutive plates 6 for the sake of simplicity, each plate 6 is rotated of a predefined angle α relative to the immediately subjacent plate 6 in a transversal plane, in particular perpendicular, to the reference axis X.

In one possible embodiment, the angle of rotation α is between 85° and 95°, preferably substantially equal to 90°.

Clearly, this angle of rotation α may be taken to be in the clockwise or anticlockwise direction; for example starting from the bottom in fig. 2, the second plate 6 is rotated 90° clockwise/anticlockwise relative to the first plate 6, whilst the third plate 6 is rotated 90° clockwise/anticlockwise relative to the second plate 6, etc.

Advantageously, in one possible embodiment of the dephlegmator 1 according to the invention, and as shown in figure 2, the plates 6 are substantially identical.

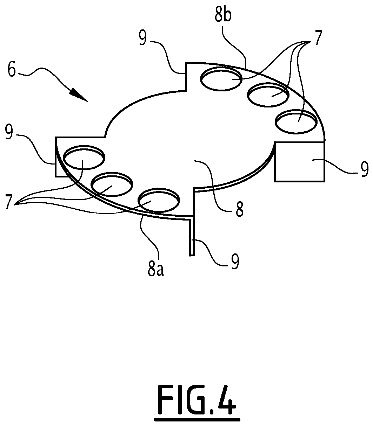

An example of a plate 6 is shown in figure 4, and comprises a substantially flat base 8 extending in a transversal plane, in particular substantially perpendicular to the reference axis X, and has, for instance, a substantially circular planform, on which the plurality of through holes 7 is formed; additionally, each plate 6 has one or more side walls 9 extending transversely from the base 8 in a direction substantially parallel to the reference axis X.

More specifically, in the embodiment shown, the plurality of through holes 7 comprises a first series of through holes 7 adjacent to one another and arranged at a first edge 8a of the base 8 and a second series of through holes 7 adjacent to one another and arranged at a second edge 8b of the base 8 that is opposite the first edge 8a relative to the reference axis X.

In turn, the one or more side walls 9 comprise, for example, a first and a second side walls 9 extending transversely from the base 8 in a direction substantially parallel to the reference axis X with the first series of through holes 7 arranged between them, and a third and fourth side walls 9 extending transversely from the base 8 in a direction substantially parallel to the reference axis X with the second series of through holes 7 arranged between them.

In one solution that is quite simple and economical from a design standpoint, each plate 6 in the dephlegmator 1 according to the invention is made from a steel sheet that is perforated and then appropriately cut along the two opposite unperforated edges, with the side walls 9 being obtained by bending.

Alternatively, the plates 6 may be made of any other suitable material, e.g. of technopolymers that are resistant to the operating temperatures of the dephlegmator.

In the embodiment shown, the plates 6 are stacked with the walls 9 acting as spacers between the plates and as supports on the base 8 of the immediately subjacent plate 6.

As can also be seen in fig. 1, in the dephlegmator 1 according to the invention, each tube 2 comprises a substantially U- or C-shaped body having a first and a second rectilinear portions 3 extending longitudinally along said direction substantially parallel to the reference axis X, and a central portion 4 which connects the respective first and second rectilinear portions 3 at their first end 3a.

Preferably, as shown in fig. 1 and 5, the plurality of U- or C-shaped tubes 2 comprises a first series of tubes 2a that are arranged side by side to each other, and a second series of tubes 2b that are arranged side by side with the respective first and second rectilinear portions 3 substantially parallel to one another; the tubes 2a of the first series of tubes 2 are inserted transversely within the concavity defined by the U- or C-shaped bodies of the tubes 2 of the second series of tubes 2b, with their curved parts arranged above the corresponding curved parts of the tubes of the second series 2b.

In practice, in this embodiment, the tubes of the two series 2a and 2b are arranged substantially perpendicularly to one another, with the former (tubes 2a) partially inserted into the space defined by the latter (tubes 2b), thus providing a solution that is compact in design and extends vertically.

Clearly, in the dephlegmator 1 according to the invention, it is possible to use more than two series of tubes 2, e.g. three series of tubes arranged at 60° to one another; accordingly, the plates 6 may be provided with three series of through holes, and may be arranged rotated at 60° to one another.

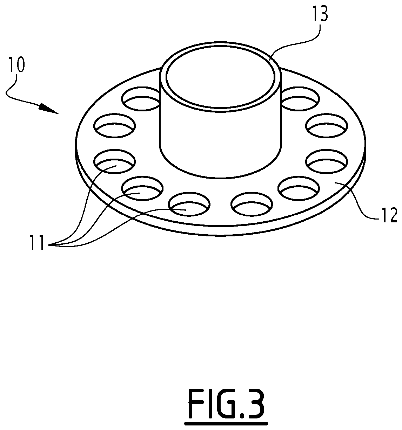

In one possible embodiment, the dephlegmator 1 according to the invention further comprises a plate 10, shown in detail in fig. 3, e.g. made of steel.

The plate 10, which extends, for example substantially planarly in a tranversal, in particular perpendicular, plane relative to the reference axis X, and has a substantially circular planform with the axis X passing through the centre, has a plurality of through holes 11 arranged sequentially at a peripheral edge 12 of the plate 10 itself.

Furthermore, the dephlegmator 1 may comprise a bottom cover or conveyor tube 13, shown in fig. 3, which is affixed, e.g. welded, to the plate 10 in a substantially central position, and is suited to be connected to a condenser external to the generator 200, towards which the rectified vapour flows V_{R} that have passed through the dephlegmator 1 and have been cooled by it and at least partially purified by the absorbent substance are to be conveyed.

In practice, the plates 6 are stacked with the vertical walls 9 of each plate supported on the base 8 of the subjacent plate 6; the fact that each plate 6 is rotated relative to the subjacent plate 6 at the angle of rotation α, e.g. 90°, makes it possible to have an alternating sequence of plates and, ultimately, to obtain four mutually aligned series of through holes 7, of which two series of through holes 7 are those of the plates 6 arranged in the stack in even-numbered positions, and the other two series of through holes 7 consist of the holes of the plates 6 arranged in the stack in odd-numbered positions.

The tubes 2 are simply inserted into the respective holes 7 of the plates 6.

In particular, each tube 2 of the first series of tubes 2a is coupled with the stack of plates 6 by inserting the respective rectilinear portions 3, each into a corresponding series of vertically aligned holes 7, more specifically in those of the plates 6 in the odd-numbered positions in the stack; in turn, the tubes of the second series of tubes 2b are coupled with the stack of plates 6 by inserting the respective rectilinear portions 3, each into a corresponding series of vertically aligned holes 7, more specifically in those of the plates 6 in the even-numbered positions in the stack.

Thus, the plates 6 can be assembled together and with the tubes 2, without any need to weld the parts together.

Moreover, the plate 10 is connected to the tubes 2; in particular, the plate 10 is welded to each tube 2 at the second free end 3b of its first and second rectilinear portions.

Lastly, the conveyor tube 13 is affixed to the plate 10.

In particular, the two free end portions 3b of each tube 2 are affixed to the plate 10 at two associated peripheral holes 11; thus, each tube 2 is associated with two respective peripheral holes 11 suitable for one to allow the coolant fluid F to enter each tube 2 and the other to flow out of it, respectively.

The assembly thus obtained may be installed in a generator 200.

In particular, depending on the specific design of the generator, in one possible embodiment, as shown in fig. 6 and 7, the components, assembled as described above and shown in fig. 5, are directly inserted into an upper part 202 of the casing 201 of the generator, which, in this case, delimits the space in which the dephlegmator 1 according to claim 1 is housed and, indeed, constitutes its outer housing.

In this case, the perforated plate 10, welded to the tubes 2, abuts the upper surface of that part of the casing 202, and is suitably affixed, e.g. welded, to it.

Alternatively, the dephlegmator 1 may have a casing of its own (not shown in the figures), which, during installation, is suitably connected to a subjacent casing that is part of the generator that is under construction.

When the generator 200 is in operation, and referring to fig. 6, the vapour generated by the boiler 50 by boiling the initial solution, indicated by the arrows V, rises through the stripper 30 to arrive at the dephlegmator 1. The flow of coolant fluid, indicated by the arrows F, in particular the water to be heated by the heat pump in which the dephlegmator is installed, enters the tubes 2 of the dephlegmator 1 via the upper plate 10, and first flows in countercurrent to, and then in co-current together with, the vapour flow V. This atypical configuration has a very slight adverse effect on the efficiency of the dephlegmator 1, because the flow rate of the fluid F flow, and in particular of water, is elevated compared to the power exchanged in the dephlegmator 1, and its temperature variation whilst passing through the dephlegmator 1 is insignificant compared to the mean temperature difference between the coolant fluid and the vapour V flow.

As described above, thanks to their configuration and mutual arrangement, the plates 6 convey the vapour V along the outer surface of the tubes 2, and, in particular, along the respective rectilinear portions 3, where, due to the heat exchange with the coolant fluid F, the vapour V is cooled, resulting in the condensation, at least in part, in particular of the absorbent, e.g. water, contained in the vapour flows V.

Thus, the purity of the refrigerant contained in the rectified vapour flows (arrow V_{R}) that have passed through the dephlegmator 1 and leave the generator 200 via the conveyor tube 13 is advantageously increased.

Furthermore, during the passage of the vapour flows V, the plates 6 cause them restirring continuously to minimize any bypass, thus preventing, or at least minimising, the possibility that some of the vapour V bypasses the dephlegmator 1 without getting into contact with the tubes 2 and without transferring heat to the coolant fluid F.

The reflux of condensed vapour, indicated in fig. 6 by arrow V_{c}, generated along the tubes of the dephlegmator 1 flows downward, from one plate 6 to the next, and, as it flows, it comes into contact in contraflow direction with new rising flows of vapour V, thus maximising the auto-analysis effect, before flowing onto the stripper 30 and undergoing further stripping.

In one possible embodiment, schematically represented in fig. 7, the dephlegmator 1 according to claim 1 further comprises a jacket 15 arranged on the outside of the plurality of tubes 2 and is in fluid communication with the inlets and outlets 3b of the tubes 2 themselves.

This jacket 15 is suited to circulate inside it flows of coolant fluid F, e.g. water, exiting the tubes 2.

This configuration allows increasing the heat exchange surface area between water and vapour, thus allowing for further reductions in the height of the dephlegmator 1, and thus of the generator 200 as a whole, with equal performance.

In the embodiment shown in fig. 7, the outer jacket 15 is shown installed on the outside of the casing 202 or part thereof that accommodates the other components above described, thus cooling its walls after flowing in the tubes 2.

Usefully, in one possible embodiment, in particular when the coolant fluid F circulating in the tubes 2 is water, the dephlegmator 1 advantageously also comprises control means suitable for regulating the flow rate of the water introduced into the plurality of tubes 2.

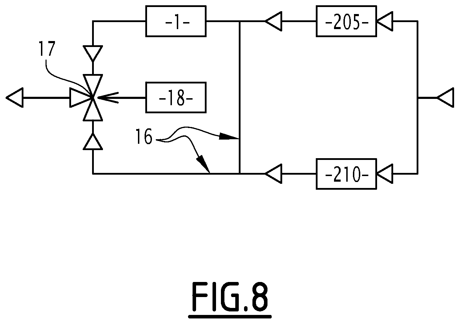

In this embodiment, as represented schematically in figure 8, a bypass branch 16 is arranged parallel to the dephlegmator 1, because the full flow rate of water must be ensured, and the flow of water is divided between the condenser 205 and the absorber 210 of the absorption machine in which the generator 200 is used so as to minimise pressure losses.

In this possible embodiment, the control means comprises for example a proportional mixing valve 17 installed downstream of the tubes 2 of the dephlegmator 1, and is actuated under the control of a suitable control unit 18.

The actuation of the mixing valve 17 allows modifying, in a regulated way, the total flow rate of the water flowing through the dephlegmator 1; thus, the capacity of the dephlegmator 1 is controlled, and, in particular, the rectification process is regulated, thus ultimately varying the purity of the refrigerant vapour, and, with it, the pressure in the condenser.

For example, to reduce the capacity of the dephlegmator 1, the flow rate of the water flowing within it is reduced, thus reducing both the mean temperature difference between the water and the vapour V and the heat exchange coefficient between the water and the tubes 2.

Thus, a refrigerant vapour is obtained that is less pure and condenses at lower pressures. This entails a reduction in the performance of the evaporator, but in the case of producing high-temperature hot water, e.g. for the production of sanitary hot water (SHW), this reduction in the maximum operating pressure of the heat pump results in significant benefits design, cost, and useful life, in particular in the case of water-ammonia heat pumps, where the production of hot water at 70°C may result in pressures above 30 absolute bar in the condenser.

It should be noted that this regulation is carried out so as to ensure a minimum flow rate in any case, in order to avoid the water boiling in the dephlegmator, with the resultant adverse fluid-dynamic effects (cavitation) in the water circuit.

In practice, it has been found that the dephlegmator 1 according to the invention achieves the indicated scope and objectives since it allows obtaining refrigerant vapour in a highly efficient way with a compact structure and at low cost.

Moreover, thanks to the invention, it is also possible to actively control the operating pressure, for instance to produce hot water at high temperature.

As noted above, the dephlegmator 1 according to the invention may advantageously be used in generators of refrigerant vapour for thermal
absorption machines.

Thus, another object of the present invention is a vapour generator 200 containing a refrigerant for thermal absorption machines, which includes for example a boiler 50 arranged at the base of the generator 200 and suitable for boiling a liquid solution L comprising at least one absorbent substance and one refrigerant substance absorbed so as to generate vapour flows V containing said absorbed refrigerant substance and possibly a percentage of absorbent substance. Such a generator 200 further comprises at least one dephlegmator 1 as described above, and, in particular, defined by the appended claims, which is arranged for instance above said boiler 50 and is adapted to be crossed by and modify the percentage of the refrigerant substance present in the vapour flows V generated by boiling.

Furthermore, this invention also includes a thermal absorption machine, e.g. a heat pump or chiller, which comprises such a generator 200 or at least one dephlegmator 1 as described above and, in particular defined in the appended claims.

Of course, without prejudice to the principle of the invention, the embodiments and specific implementations may be widely varied with respect to what previously described and illustrated as non-limiting examples without departing from the scope of the present invention as defined in the appended claims.

## Claims

1. Dephlegmator (1) for a refrigerant vapor generator (200) for thermal
absorption machines, wherein it comprises at least:
- a plurality of tubes (2), wherein each tube (2) comprises a first rectilinear portion (3) extending longitudinally along a direction substantially parallel to a substantially vertical reference axis (X) of the dephlegmator (1), said tubes (2) being devised for circulating inside them a cooling fluid suitable for cooling vapor flows (V) which pass through the dephlegmator (1);
- a plurality of plates (6) which are stacked up in sequence along said reference axis (X) and comprise each a plurality of through holes (7) which are each crossed by a corresponding rectilinear portion (3) of a tube ( 2), said plates (6) being further configured and mutually arranged between them so as to convey, at least partially, said vapor flows (V) which cross the dephlegmator (1) along the external walls of the rectilinear portions (3) of one or more tubes (2) of said plurality of tubes,
**characterized in that** each tube (2) comprises a substantially U or C shaped body having also a second rectilinear portion extending longitudinally along a direction substantially parallel to a substantially vertical reference axis of the dephlegmator, and a central portion which connects said first and second rectilinear portions at their first end.

2. Dephlegmator (1) according to claim 1, wherein each plate (6) of said plurality of plates (6) is rotated with respect to the plate (6) immediately below it by a predefined angle (α) in a transverse plane with respect to said reference axis (X).

3. Dephlegmator (1) according to claim 2, wherein said angle (α) is between 85 ° and 95°.

4. Dephlegmator (1) according to claim 3, wherein said angle (α) is substantially equal to 90°.

5. Dephlegmator (1) according to one or more of the preceding claims, wherein said plates (6) are substantially identical to each other.

6. Dephlegmator (1) according to one or more of the preceding claims, wherein said plates (6) comprise a substantially flat base (8) on which there is provided said plurality of through holes (7), and one or more side walls (9) which extend transversely from the base (8) in a direction substantially parallel to said reference axis (X).

7. Dephlegmator (1) according to claim 6, wherein said plurality of through holes (7) comprises at least a first series of through holes (7) adjacent to each other and arranged at a first edge (8a) of the base (8 ), and at least a second series of through holes (7) adjacent to each other and arranged at a second edge (8b) of the base (8) opposite the first edge (8a) with respect to said reference axis (X).

8. Dephlegmator (1) according to claim 7, wherein said one or more side walls (9) comprise at least a first and a second side walls (9) which extend transversely from the base (8) in a direction substantially parallel to said reference axis (X) with said first series of through holes (7) interposed between them, and a third and a fourth lateral walls (9) which extend transversely from the base (8) in a direction substantially parallel to said reference axis (X) with said second series of through holes (7) interposed between them.

9. Dephlegmator (1) according to one or more of the preceding claims, wherein said plurality of U- or C-shaped tubes (2) comprises at least a first series of tubes (2a) which are arranged side by side with their respective first and second rectilinear portions (3) substantially parallel to each other, and at least a second series of tubes (2b) which are arranged side by side with their respective first and second rectilinear portions (3) substantially parallel to each other, the tubes (2a) of the first series of tubes being arranged transversely with respect to the tubes (2b) of the second series of tubes.

10. Dephlegmator (1) according to one or more of the preceding claims, further comprising a substantially planar plate (10) having a plurality of peripheral through holes (11) arranged in sequence at a peripheral edge (12) of the plate (10) itself, each tube (2) having the second free ends (3b) of its first and second rectilinear portions (3) fixed to the plate (10) at two peripheral holes (12) adapted to respectively allow entry into and exit from each tube (2) of said cooling fluid.

11. Dephlegmator (1) according to claim 10, comprising a conveyor tube (13) which is fixed, in a substantially central position, to the plate (10) and is suitable to be connected to a condenser towards which the vapor flows (V) that have passed through the dephlegmator (1).

12. Dephlegmator (1) according to one or more of the preceding claims, further comprising a jacket (15) which is arranged externally to the plurality of tubes (2) and is in fluid communication with said tubes (2) and is able to circulate internally flows of cooling fluid (F) leaving said tubes (2).

13. Dephlegmator (1) according to one or more of the preceding claims, wherein said cooling fluid (F) is water and the dephlegmator (1) further comprises control means (17, 18) suitable for regulating the flow rate of water introduced into the plurality of tubes (2).

14. Generator (200) of coolant vapor for thermal absorption machines, **characterized in that** it comprises at least one dephlegmator (1) according to one or more of the preceding claims.

15. Thermal absorption machine, **characterized in that** it comprises a generator (200) according to claim 14 or a dephlegmator (1) according to one or more of claims 1 to 13.

## Patentansprüche

1. Dephlegmator (1) für einen Kältemitteldampferzeuger (200) für thermische Absorptions-maschinen, wobei er mindestens Folgendes umfasst:
- eine Vielzahl von Rohren (2), wobei jedes Rohr (2)
einen ersten geradlinigen Abschnitt
(3) umfasst, der sich
in Längsrichtung in einer Richtung im Wesentlichen parallel zu einer im Wesentlichen vertikalen Bezugsachse (X) des Dephlegmators (1) erstreckt, wobei die Rohre (2) dazu vorgesehen sind, in ihrem Inneren ein Kühlfluid zirkulieren zu lassen, das zur Kühlung von Dampfströmen (V) geeignet ist, die durch den Dephlegmator (1) verlaufen;
- eine Vielzahl von Platten (6), die nacheinander entlang der Bezugsachse (X) gestapelt sind und jeweils eine Vielzahl von Durchgangslöchern (7) aufweisen, die jeweils von einem entsprechenden geradlinigen Abschnitt (3) eines Rohrs ( 2) gekreuzt werden, wobei die Platten (6) ferner konfiguriert und dazwischen angeordnet sind, um die Dampfströme (V), die durch den Dephlegmator (1) verlaufen, zumindest teilweise entlang der Außenwände der geradlinigen Abschnitte (3) eines oder mehrerer Rohre (2) der Vielzahl von Rohren leiten,
**dadurch gekennzeichnet, dass** jedes Rohr (2) einen im Wesentlichen U- oder C-förmigen Körper, der auch einen zweiten geradlinigen Abschnitt aufweist, der sich in Längsrichtung entlang einer Richtung erstreckt, die im Wesentlichen parallel zu einer im Wesentlichen vertikalen Bezugsachse des Dephlegmators ist, sowie einen mittleren Abschnitt, der den ersten und den zweiten geradlinigen Abschnitt an ihrem ersten Ende verbindet, umfasst.

2. Dephlegmator (1) nach Anspruch 1, wobei jede Platte (6) der Vielzahl von Platten (6) in Bezug auf die unmittelbar darunter liegende Platte (6) um einen vordefinierten Winkel (α) in einer Querebene in Bezug auf die Bezugsachse (X) gedreht ist.

3. Dephlegmator (1) nach Anspruch 2, wobei der Winkel (α) zwischen 85° und 95° ist.

4. Dephlegmator (1) nach Anspruch 3, wobei der Winkel (α) im Wesentlichen gleich 90° ist.

5. Dephlegmator (1) nach einem oder mehreren der vorherigen Ansprüche, wobei die Platten (6) im Wesentlichen identisch zueinander sind.

6. Dephlegmator (1) nach einem oder mehreren der vorherigen Ansprüche, wobei die Platten (6) eine im Wesentlichen flache Basis (8), auf der die Vielzahl von Durchgangslöchern (7) bereitgestellt ist, und eine oder mehrere Seitenwände (9), die sich quer von der Basis (8) in einer Richtung im Wesentlichen parallel zu der Bezugsachse (X) erstrecken, umfassen.

7. Dephlegmator (1) nach Anspruch 6, wobei die Vielzahl von Durchgangslöchern (7) mindestens eine erste Reihe von Durchgangslöchern (7), die aneinander angrenzen und an einem ersten Rand (8a) der Basis (8) angeordnet sind, und mindestens eine zweite Reihe von Durchgangslöchern (7), die aneinander angrenzen und an einem zweiten Rand (8b) der Basis (8) gegenüber dem ersten Rand (8a) in Bezug auf die Bezugsachse (X) angeordnet sind, umfasst.

8. Dephlegmator (1) nach Anspruch 7, wobei die eine oder mehreren Seitenwände (9) mindestens eine erste und eine zweite Seitenwand (9), die sich quer von der Basis (8) in einer Richtung im Wesentlichen parallel zu der Bezugsachse (X) mit der
ersten Reihe von Durchgangslöchern (7), die dazwischen angeordnet sind, und eine dritte und eine vierte Seitenwand (9), die sich quer von der Basis (8) in einer Richtung im Wesentlichen parallel zu der Bezugsachse (X) erstrecken, wobei die zweite Reihe von Durchgangslöchern (7) dazwischen angeordnet ist, umfassen.

9. Dephlegmator (1) nach einem oder mehreren der vorherigen Ansprüche, wobei die Vielzahl von U- oder C-förmigen Rohren (2) mindestens eine erste Reihe von Rohren (2a), die Seite an Seite mit ihren jeweiligen ersten und zweiten geradlinigen Abschnitten (3) im Wesentlichen parallel zueinander angeordnet sind, und mindestens eine zweite Reihe von Rohren (2b), die Seite an Seite mit ihren jeweiligen ersten und zweiten geradlinigen Abschnitten (3) im Wesentlichen parallel zueinander angeordnet sind, umfasst, wobei die Rohre (2a) der ersten Reihe von Rohren quer zu den Rohren (2b) der zweiten Reihe von Rohren angeordnet sind.

10. Dephlegmator (1) nach einem oder mehreren der vorherigen Ansprüche, ferner umfassend eine im wesentlichen ebene Platte (10), die eine Vielzahl von peripheren Durchgangslöchern (11) aufweist, die in Folge an einer peripheren Kante (12) der Platte (10) an sich angeordnet sind, wobei jedes Rohr (2) die zweiten freien Enden (3b) seiner ersten und zweiten geradlinigen Abschnitte (3) aufweist, die an der Platte (10) an zwei peripheren Löchern (12) befestigt sind, die angepasst sind, um jeweils einen Eintritt bzw. Austritt des Kühlfluids in jedes Rohr (2) zu ermöglichen.

11. Dephlegmator (1) nach Anspruch 10, umfassend ein Förderrohr (13), das an einer im Wesentlichen mittleren Position an der Platte (10) befestigt ist und geeignet ist, um mit einem Kondensator verbunden zu werden, zu dem die Dämpfe (V) strömen, die durch den Dephlegmator (1) verlaufen sind.

12. Dephlegmator (1) nach einem oder mehreren der vorherigen Ansprüche, ferner umfassend einen Mantel (15) umfasst, der außerhalb der Vielzahl von Rohren (2) angeordnet ist und in Fluidverbindung mit den Rohren (2) ist und in der Lage ist, interne
Ströme von Kühlfluid (F), die aus den Rohren (2) austreten, zirkulieren zu lassen.

13. Dephlegmator (1) nach einem oder mehreren der vorherigen Ansprüche, wobei das Kühlfluid (F) Wasser ist und der Dephlegmator (1) ferner Steuereinrichtungen (17, 18) umfasst, die geeignet sind, um die Durchflussrate des in die Vielzahl von Rohren (2) eingeleiteten Wassers zu regulieren.

14. Generator (200) für Kältemitteldampf für
Wärmeabsorptionsmaschinen, **dadurch gekennzeichnet,**
**dass** er mindestens einen Dephlegmator (1) nach einem oder mehreren der vorherigen Ansprüche umfasst.

15. Thermische Absorptionsmaschine, **dadurch gekennzeichnet, dass** sie einen Generator (200) nach Anspruch 14 oder einen Dephlegmator (1) nach einem oder mehreren der Ansprüche 1 bis 13 umfasst.

## Revendications

1. Déflegmateur (1) pour un générateur de vapeur de réfrigérant (200) pour des machines
d'absorption
thermique, dans lequel il comprend au moins :
- une pluralité de tubes (2), dans lequel chaque tube (2) comprend
une première partie rectiligne
(3) s'étendant
longitudinalement le long d'une direction sensiblement parallèle à un axe de référence sensiblement vertical (X) du déflegmateur (1), lesdits tubes (2) étant conçus pour faire circuler à l'intérieur un fluide de refroidissement approprié pour refroidir les flux de vapeur (V) qui traversent le déflegmateur (1) ;
- une pluralité de plaques (6) qui sont empilées en séquence le long dudit axe de référence (X) et comprennent chacune une pluralité de trous traversants (7) qui sont chacun traversés par une partie rectiligne correspondante (3) d'un tube ( 2), lesdites plaques (6) étant en outre configurées et disposées mutuellement entre elles de manière à transporter, au moins partiellement, lesdits flux de vapeur (V) qui traversent le déflegmateur (1) le long des parois externes des parties rectilignes (3) d'un ou de plusieurs tubes (2) de ladite pluralité de tubes,
**caractérisé par le fait que** chaque tube (2) comprend un corps en forme de U ou de C présentant également une deuxième partie rectiligne s'étendant longitudinalement le long d'une direction sensiblement parallèle à un axe de référence sensiblement vertical du déflegmateur, et une partie centrale qui relie les première et deuxième parties rectilignes à leur première extrémité.

2. Déflegmateur (1) selon la revendication 1, dans lequel chaque plaque (6) de ladite pluralité de plaques (6) est tournée par rapport à la plaque (6) immédiatement inférieure d'un angle prédéfini (α) dans un plan transversal par rapport à l'axe de référence (X).

3. Déflegmateur (1) selon la revendication 2, dans lequel ledit angle (α) est compris entre 85° et 95°.

4. Déflegmateur (1) selon la revendication 3, dans lequel ledit angle (α) est sensiblement égal à 90°.

5. Déflegmateur (1) selon l'une ou plusieurs des revendications précédentes, dans lequel lesdites plaques (6) sont sensiblement identiques l'une à l'autre.

6. Déflegmateur (1) selon l'une ou plusieurs des revendications précédentes, dans lequel lesdites plaques (6) comprennent une base sensiblement plate (8) sur laquelle se trouve ladite pluralité de trous traversants (7), et une ou plusieurs parois latérales (9) qui s'étendent transversalement à partir de la base (8) dans une direction sensiblement parallèle à l'axe de référence (X).

7. Déflegmateur (1) selon la revendication 6, dans lequel ladite pluralité de trous traversants (7) comprend au moins une première série de trous traversants (7) adjacents les uns aux autres et disposés sur un premier bord (8a) de la base (8 ), et au moins une deuxième série de trous traversants (7) adjacents les uns aux autres et disposés sur un deuxième bord (8b) de la base (8) opposé au premier bord (8a) par rapport à l'axe de référence (X).

8. Déflegmateur (1) selon la revendication 7, dans lequel ladite ou lesdites parois latérales (9) comprennent au moins une première et une deuxième parois latérales (9) qui s'étendent transversalement à partir de la base (8) dans une direction sensiblement parallèle à l'axe de référence
(X) avec ladite
première série de trous traversants (7) intercalés entre eux, et une troisième et une quatrième parois latérales (9) qui s'étendent transversalement à partir de la base (8) dans une direction sensiblement parallèle audit axe de référence (X) avec ladite deuxième série de trous traversants (7) intercalés entre eux.

9. Déflegmateur (1) selon l'une ou plusieurs des revendications précédentes, dans lequel ladite pluralité de tubes en forme de U ou de C (2) comprend au moins une première série de tubes (2a) qui sont disposés côte à côte avec leurs première et deuxième portions rectilignes (3) respectives sensiblement parallèles l'une à l'autre, et au moins une deuxième série de tubes (2b) disposés côte à côte avec leurs première et deuxième parties rectilignes (3) respectives sensiblement parallèles l'une à l'autre, les tubes (2a) de la première série de tubes étant disposés transversalement par rapport aux tubes (2b) de la deuxième série de tubes.

10. Déflegmateur (1) selon l'une ou plusieurs des revendications précédentes, comprenant en outre une plaque sensiblement plane (10) présentant une pluralité de trous traversants périphériques (11) disposés en séquence sur un bord périphérique (12) de la plaque (10) elle-même, chaque tube (2) présentant les deuxièmes extrémités libres (3b) de ses première et deuxième parties rectilignes (3) fixées à la plaque (10) au niveau de deux trous périphériques (12) adaptés pour permettre respectivement l'entrée dans et la sortie de chaque tube (2) dudit fluide de refroidissement.

11. Déflegmateur (1) selon la revendication 10, comprenant un tube transporteur (13) qui est fixé, dans une position sensiblement centrale, à la plaque (10) et qui est apte à être connecté à un condenseur vers lequel les flux de vapeur (V) qui ont traversé le déflegmateur (1) s'écoulent.

12. Déflegmateur (1) selon l'une ou plusieurs des revendications précédentes, comprenant en outre une enveloppe (15) disposée à l'extérieur de la pluralité de tubes (2), en communication fluidique avec lesdits tubes (2) et capable de faire circuler à l'intérieur des flux de fluide de refroidissement (F) quittant lesdits tubes (2).

13. Déflegmateur (1) selon l'une ou plusieurs des revendications précédentes, dans lequel ledit fluide de refroidissement (F) est de l'eau et le déflegmateur (1) comprend en outre des moyens de commande (17, 18) aptes à réguler le débit d'eau introduit dans la pluralité de tubes (2).

14. Générateur (200) de vapeur de refroidissement pour des machines d'absorption thermique, **caractérisé en**
**ce qu'**il comprend au moins un déflegmateur (1), selon une ou plusieurs des revendications précédentes.

15. Machine d'absorption thermique,
**caractérisée par le fait qu'**elle comprend un générateur (200) selon la revendication 14 ou un déflegmateur (1) selon l'une ou plusieurs des revendications 1 à 13.
